# EUROPEAN PATENT SPECIFICATION

(11) **EP 4 210 493 B1**
(45) Date of publication and mention of the grant of the patent: **17.04.2024**
(21) Application number: 21773394.8
(22) Date of filing: 08.09.2021
(51) Int. Cl.: A21D 13/066, A21D 2/18, A21D 13/045, A21D 10/00, A21D 13/047

(54) **FOOD COMPOSITION FOR THE PREPARATION OF A NATURALLY LEAVENED BAKERY PRODUCT FREE OF GLUTEN**
NAHRUNGSMITTELZUSAMMENSETZUNG ZUR HERSTELLUNG EINES GLUTENFREIEN, NATÜRLICH GETRIEBENEN BACKWARENPRODUKTS
COMPOSITION ALIMENTAIRE POUR LA PREPARATION D'UN PRODUIT DE BOULANGERIE AU LEVAIN NATUREL SANS GLUTEN

(30) Priority: 09.09.2020 IT 202000021295
(43) Date of publication of application: 19.07.2023
(73) Proprietor: BARILLA G. e R. Fratelli S.p.A., 43100 Parma (IT)
(72) Inventor: MORBARIGAZZI, Nadia, 43124 Parma (IT); DE MICHELI, Tiziana, 43125 Parma (IT)
(74) Representative: Botti & Ferrari S.p.A.
(86) International application number: PCT/EP2021/074681
(87) International publication number: WO 2022/053499

(56) References cited:
- MA-A1- 20 150 001
- US-A1- 2014 093 611
- US-A1- 2019 343 133
- B. MINARRO ET AL: "Effect of legume flours on baking characteristics of gluten-free bread", JOURNAL OF CEREAL SCIENCE, vol. 56, no. 2, 1 September 2012 (2012-09-01), pages 476-481, XP055353459, GB ISSN: 0733-5210, DOI: 10.1016/j.jcs.2012.04.012
- FRANCESCA MELINI ET AL: "Current and Forward-Looking Approaches to Technological and Nutritional Improvements of Gluten-Free Bread with Legume Flours: A Critical Review", COMPREHENSIVE REVIEWS IN FOOD SCIENCE AND FOOD SAFETY, vol. 16, no. 5, 4 July 2017 (2017-07-04), pages 1101-1122, XP055694638, US ISSN: 1541-4337, DOI: 10.1111/1541-4337.12279

## Description

### Field of application

The present invention relates to the food industry sector and in particular relates to a food composition for the preparation of naturally leavened products, free of gluten and artificial thickening agents.

### Prior art

In recent years there has been a constant increase in the variety of food products which are gluten-free.

It is known that gluten is a protein complex which comprises gliadin and glutenin and is found in most cereals (for example, wheat, rye, oat, barley and also triticale and spelt).

In food products containing gluten, such as leavened bakery products, it is known that gluten is mainly responsible for the elasticity of the dough as well as its structure and soft consistency.

It is also known that gluten-free products are made specifically for persons who are intolerant to this protein.

Celiac disease is an autoimmune genetic disease of the mucus of the small intestine, caused by the permanent intolerance to alcohol-soluble prolamins, in particular gliadin.

Gluten intolerance results in serious lesions of the intestinal mucus, such as atrophy of the intestinal villi, hypertrophy of the crypts and an increase in the number of intraepithelial lymphocytes. These lesions initially affect the duodenum and the proximal jejunum and then spread further away towards the ileum. This results in a reduction in the useful area for absorption of the nutrients present in the intestinal lumen and malabsorption therefore occurs. This malabsorption is all the greater the more extensive the lesions are along the small intestine and results in clinical symptoms such as weight loss, diarrhoea, abdominal swelling, anaemia, osteoporosis, etc.

At present, the main strategy for alleviating the symptoms of celiac disease consists in adopting a gluten-free diet which must be rigorously observed during the whole of one's lifetime, since only small quantities of gluten are needed to prevent histological improvement. Inevitably, this necessity gives rise to significant conditioning and discomfort, in terms of both diet and social life, for the persons affected by this illness.

In addition to celiac diseases, it is known that there exist other disturbances linked with the intake of gluten, including "gluten sensitivity" and "gluten allergy", often diagnosed in adult patients, with clinical manifestations associated not only with the intestine.

Typically, these persons must also resort to the adoption of a gluten-free food diet.

The food industry has attempted to solve this problem by providing specific products which are completely gluten-free, including pasta, bread, pizza, etc., with organoleptic properties which are as similar as possible to those of the corresponding traditional gluten-containing foods.

Very often the persons who follow a gluten-free diet resort to homemade food preparations by acquiring the single ingredients or ready-made products which are available on the market, the main drawback being the uncertainty as to the quality of the end product.

It is also known that the naturally leavened, gluten-free products which are currently available on the market contain cellulose derivatives as substitutes for the gluten.

In particular, hydroxypropyl methylcellulose is a synthesis product commonly used an emulsifier and thickening agent (indicated on product labels by the code "E464"), owing to its property of favouring the aeration of the dough during mixing, and retaining the carbon dioxide, which is produced during the leavening process, thus ensuring that a well-leavened end product is obtained.

However, the addition of cellulose derivatives may negatively influence the taste of the finished product, since these derivatives contribute substantially towards accentuating the unpleasant "aftertaste" which is typical of gluten-free products. Moreover, these cellulose derivatives are viewed by consumers as being unnatural ingredients.

Some commercially available preparations which do not contain hydroxypropyl methylcellulose contain gums, for example guar gum and xanthan gum, which act as thickening agents and are classified as "additives" with the corresponding symbol "E" shown on the label.

However, the structural characteristics of the bakery products and doughs containing these gums in place of the gluten are not entirely satisfactory. There therefore exists the need to provide gluten-free food products which are also devoid of cellulose derivatives and have organoleptic and structural characteristics as close as possible to those of conventional gluten-containing products.

The preparations sometimes contain other sources of protein such as milk protein by way of partial replacement of the gluten proteins, but often the persons who consume gluten-free products, are also unable to consume milk derivatives and there is also a significant impact on the taste of the end product.

The commercially available product "Organic Gluten-free Local Bread Mix" (Database GNPD MINTEL Acc. No. 5332061) describes a gluten-free mixture for bakery products, comprising rice flour, chestnut flour, cassava starch and guar gum.

The commercially available product "Gluten Free Wholegrain Oat Bread Mix" (Database GNPD MINTEL Acc. No. 6541291) describes a mixture for gluten-free wholemeal oat bread, comprising oat flakes, wholemeal rice flour, (fermented) buckwheat, quinoa flour, sea salt, guar gum. The commercially available product "Organic and Gluten-Free Baking Mix" (Database GNPD MINTEL Acc. No. 6139177) describes a gluten-free mixture for bakery products, comprising corn starch, buckwheat flour, chickpea flour, prebiotic plant fibres, cane sugar, psyllium seed husks, guar gum and xanthan gum.

Patent application US 2009/181147 describes a gluten-free dry mixture for bakery products, comprising rice flour, bean flour, tapioca starch, corn starch, powder yeast, sodium bicarbonate and any combination of guar gum, xanthan gum, carob gum and/or locust root.

Patent application US 2010/015279 describes a gluten-free dough comprising gluten-free flour, leavening agents, modified starch, guar gum, xanthan gum, gum Arabic or semi-synthetic hydrophilic colloids, water, proteins, sweeteners, emulsifiers and vegetable oil.

The patent PL 227 168 describes a dry mixture for gluten-free bread-making products, comprising bean flour, starchy ingredients (gluten-free wheat starch and potato starch), cereal-based ingredients (buckwheat flour, buckwheat husk, instant bean flour, potato flake flour) and guar gum.

A flour mix based on rice flour, chickpea flour, maize flour and guar gum, which is used in the preparation of gluten-free bakery products, is disclosed in MA 20150001 A1.

The guar gum used in the aforementioned compositions and mixtures of the prior art is non-hydrolysed or partially hydrolysed whole guar gum.

The problem underlying the present invention is that of providing a food composition for the preparation of naturally leavened bakery products, free of gluten and the components thereof, and also free of cellulose derivatives, which, following leavening and baking, results in a bakery product having structural, organoleptic and taste properties comparable to those of the corresponding gluten-containing bakery products.

### Summary of the invention

This problem is solved, according to the present invention, by providing a food composition for the preparation of a naturally leavened bakery product free of gluten or components thereof, comprising at least a starchy ingredient free of gluten or components thereof, a legume flour and partially hydrolysed guar gum having a molecular weight of between 500,000 Da and 1,000,000 Da, said composition being free of cellulose derivatives.

Preferably, the legume flour is chosen from the group comprising chickpea flour, bean flour, faba bean four, pea flour, lentil flour.

Preferably the legume flour is chickpea flour.

Preferably, the food composition according to the invention contains at least 4%, advantageously 5-8% by weight of chickpea flour.

Preferably, the food composition according to the invention contains at least 1%, advantageously 1.5-5% by weight of said partially hydrolysed guar gum.

The expression "starchy ingredient free of gluten or components thereof' is understood as meaning a flour obtained from cereals not containing gluten or components thereof (for example rice and corn) or from tubers and roots not containing gluten (such as potato and cassava) or starch extracted from legumes (e.g. pea starch).

Preferably, the starchy ingredient free of gluten or components thereof is chosen from the group comprising corn starch, rice starch, potato starch, pea starch, cassava starch, sorghum starch and mixtures thereof.

Preferably, the food composition further comprises rice sourdough.

Preferably, the food composition comprises two starchy ingredients free of gluten. These two starchy ingredients free of gluten preferably consist of corn starch and rice starch.

Preferably, the food composition also comprises resistant corn starch.

A preferred food composition comprises, in percentage by weight of the total weight of the composition, 45% to 55% of corn starch, 25% to 35% of rice flour, 6% to 8 % of chickpea flour, 3% to 5% of resistant corn starch, 2% to 4% of sugar, 1% to 3% of rice sourdough, 1.5% to 3% of said partially hydrolysed guar gum.

The percentages indicated must be understood as being percentages by weight of the total weight of the composition.

Preferably, the food composition is in the form of a dry powder.

According to one aspect thereof, the present invention also relates to a dough for the preparation of bakery products without gluten, comprising a food composition as defined above.

According to another aspect thereof, the present invention also relates to a gluten-free bakery product comprising a food composition as defined above.

The combination of raw chickpea flour and partially hydrolysed guar gum having a molecular weight of between 500,000 Da and 1,000,000 Da provides advantageously the baked finished product with the structural and organoleptic properties such as to make it a valid alternative to the cellulose derivatives in the food preparations for gluten-free bakery products.

Advantageously, the aforementioned partially hydrolysed guar gum is able to retain the water in the dough, making it more viscous, but without thickening it.

The effect is linked to the different molecular weight of the two guar derivatives (partially hydrolysed gum and conventional gum), the chemical structure of which is based on galactomannan chains: the partially hydrolysed guar gum according to the present invention has a molecular weight of between 500,000 Daltons and 1 million Daltons, differently from non-hydrolysed conventional guar gum which has molecular weight values of between 2 and 3 million Daltons.

Advantageously, (raw) chickpea flour, being rich in protein, contributes towards the elasticity of the structure of the final product. It is also rich in group B vitamins and mineral salts such as calcium, phosphorus, iron and zinc, assisting the incorporation of these nutrients in the consumer's diet.

Precooked chickpea flour contains partially gelatinized starch which increases the water absorption thereof, making the mixture denser; furthermore the slightly denatured proteins lose their structuring capacity.

Advantageously, rice flour is present in the food composition of the invention in quantities of between 35% and 45% by weight of the total weight of the composition.

The choice of rice flour is associated with two main factors: starch with a small particle size and low gelatinization temperature which increases the workability of the dough and the palatability of the end product and protein component which contributes to the structure and nutritional enrichment of the end product.

Moreover, the resistant corn starch contained in the food composition of the present invention has multiple nutritional benefits since it modulates the absorption of the carbohydrates, lowering the glycaemic peak generated by the food in which it is included and improves the intestinal flora acting as prebiotic fibre.

The rice sourdough, another ingredient of the present composition, is advantageously present in a quantity of between about 1% and 3% by weight of the total weight of the food composition and has a positive impact on the taste of the finished product.

The rice sourdough, which is derived from the fermentation of rice flour by Lactobacilli, after drying and adding to the preparation all the aromatic components generated by fermentation, may be added in a limited quantity so as not to lower the pH value of the food composition interfering with the natural leavening.

### Brief description of the figures

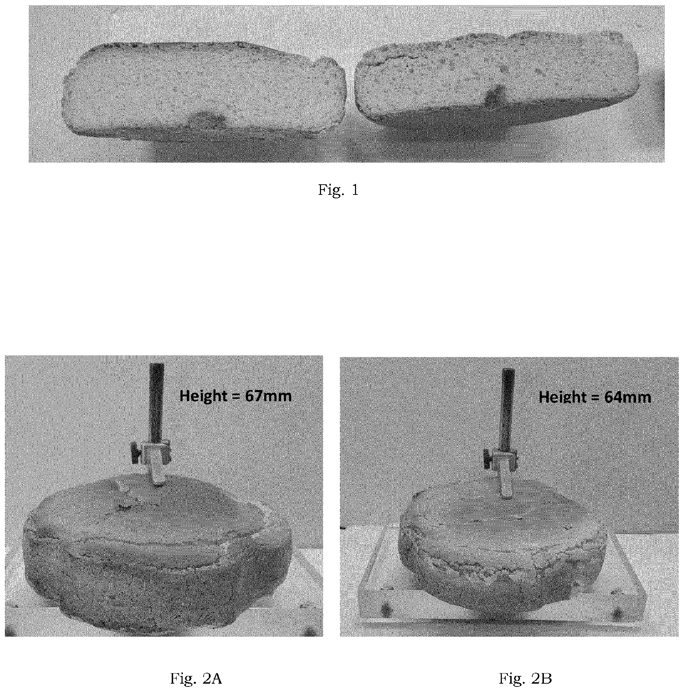

Figure 1 is a photograph showing, on the left, a gluten-free bread, prepared from a food composition according to the present invention and, on the right, a gluten-free bread prepared from an identical food composition in which however the partially hydrolysed guar gum as defined in the present invention is replaced by an identical amount of conventional non-hydrolysed guar gum.
Figures 2A and 2B are respective photographs of the breads of Figure 1 (on the left, the bread according to the present invention and, on the right, the bread containing the conventional non-hydrolysed guar gum instead of the partially hydrolysed guar gum according to the present invention), in which the height of these products following natural leavening and baking is shown.

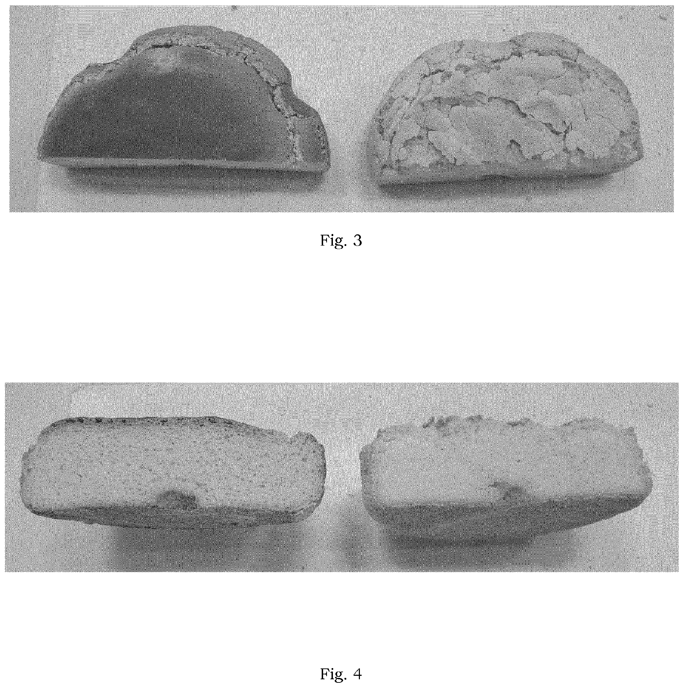

Figure 3 is a photograph taken from above, showing, on the left, a gluten-free bread prepared with a food composition according to the present invention and, on the right, a gluten-free bread prepared with an identical food composition except for the fact that it does not contain chickpea flour, which has been replaced by an identical amount of corn starch.
Figure 4 shows front-on photographs of the breads according to Figure 3 (on the left, the bread according to the invention and, on the right, the bread containing corn starch instead of chickpea flour).

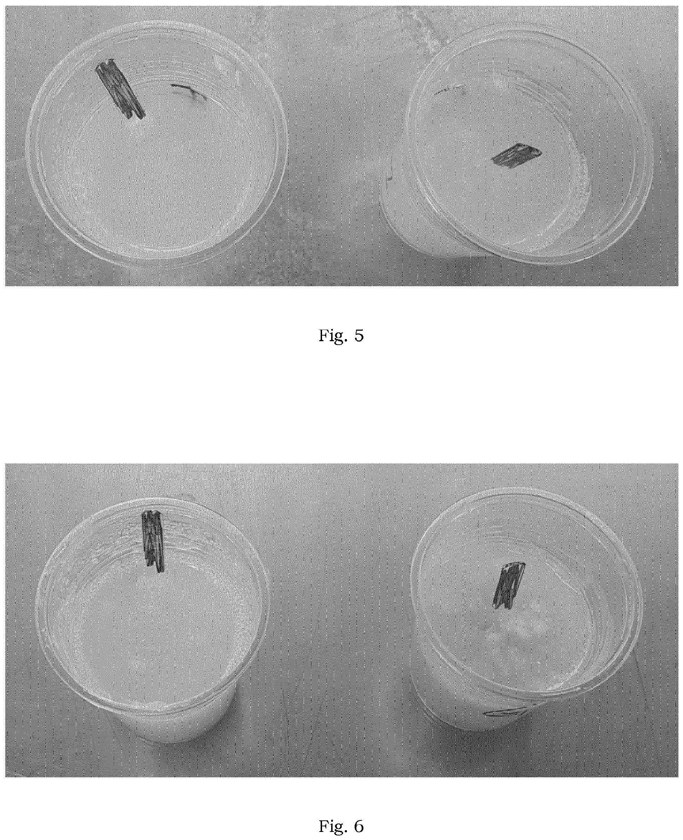

Figure 5 is a photograph showing, on the left, an aqueous solution of partially hydrolysed guar gum according to the present invention and, on the right, an aqueous solution of conventional non-hydrolysed guar gum, both in a concentration of 2%.
Figure 6 is a photograph showing, on the left, an aqueous solution of partially hydrolysed guar gum according to the present invention and, on the right, an aqueous solution of conventional non-hydrolysed guar gum, both in a concentration of 5%.

### Detailed description of the invention

The present invention relates to a food composition for the preparation of a naturally leavened bakery product free of gluten or components thereof, comprising at least a starchy ingredient free of gluten or components thereof, a legume flour and partially hydrolysed guar gum having a molecular weight of between 500,000 Da and 1,000,000 Da, said composition being free of cellulose derivatives.

In particular, the food composition according to the present invention is in the form of a powder mixture with a prolonged stability; for the preparation of the desired bakery product, it is required to mix the aforementioned composition with liquid ingredients, for example water and/or oil, and natural yeasts.

The expression "bakery product", as used here, is understood as meaning a food product based on cereal flours and obtained by means of baking in an oven: for example, bread, biscuits, crackers, focaccia, pizza, cakes, savoury cakes, hot-dog rolls and pizza bases.

The expression "natural leavening", as used here, is understood as meaning leavening of a bakery product due to the presence of yeasts, preferably *Saccharomyces cerevisiae,* and/or different species of heterofermentative and/or homofermentative lactic bacteria of the *Lactobacillus* genus.

The expression "gluten" or "glutens and components thereof", as used here, is understood as meaning gluten, glutenin, gliadin and other prolamins.

The expression "partially hydrolysed guar gum", as used here, is understood as meaning a guar gum obtained by means of depolymerization of conventional guar gum (having a molecular weight of between 2 million Da and 3 million Da); the partially hydrolysed guar gum according to the present invention is characterized by a molecular weight of between 500,000 Da and 1,000,000 Da.

The expression "chickpea flour", as used here, is understood as meaning the flour obtained from the milling (for example using cylinders or hammers) of dried chickpeas (in which at the most 20% of the particles have a particle size greater than 250 µm and at the most 50% of the particles have a particle size greater than 125 µm).

In addition to the aforementioned partially hydrolysed guar gum and chickpea flour, the food composition according to the present invention preferably comprises corn starch, resistant corn starch and rice flour which are naturally gluten-free; also preferably present are rice sourdough, in order to improve the taste of the finished product, sugar and salt.

The expression "corn starch", as used here, is understood as meaning native starch derived from the physical extraction using a wet method.

The following Tables 1A and 1B show how starches derived from different natural sources (corn, waxy corn, wheat, rice, pea, potato, and tapioca) have variable compositions, in particular with regard to the percentage ratios of amylose and amylopectin, the particle size and the gelatinization temperature.

**Table 1A: Chemical/physical characteristics of starch derived from: corn, waxy corn, wheat, rice, potato, and tapioca.**

| **Properties** | **Corn** | **Waxy corn** | **Wheat** | **Rice** | **Potato** | **Tapioca** |
|---|---|---|---|---|---|---|
| DSC onset temperature (°C) | 57 | 60 | 55 | 64 | 60 | 63 |
| DSC peak (°C) | 70 | 62 | 63 | 68 | 66 | 71 |
| DSC enthalpy | 84 | 84 | 73 | 74 | 76 | 81 |
| Starch gel viscosity (**) | Medium | Medium-high | Medium-low | Medium-high | Very high | High |
| Consistency (elongation at break) starch gel (*) | Short | Long | Short | / | Long | Long |
| Retrogradation speed | High | Very low | High | Very low | Very low | Low |

| | | | | | | |
|---|---|---|---|---|---|---|
| (*) The "consistency" was assessed on gelatinized starch gel obtained after baking of a 10% aqueous solution. The gel obtained was collected and subjected to an upward tensile force so as to cause elongation thereof in the direction of the said force. (**) The gelatinization temperature and viscosity of the starch gel (i.e. a 10% aqueous solution of starch) were detected by means of a MICRO VISCO-AMILOGRAPH^{®} made by the company Brabender GmbH 8v Co KG (distributed in Italy by Belotti Strumenti S.r.L). | | | | | | |

**Table 1B: Physical/chemical characteristics of starch derived from: wheat, waxy corn, corn, potato, tapioca and pea.**

| **Properties** | **Wheat** | **Waxy corn** | **Corn** | **Potato** | **Tapioca** | **Pea** |
|---|---|---|---|---|---|---|
| Gelatinization temperature (°C) (**) | 85 | 72 | 75 | 65 | 72 | 80 |
| Maximum viscosity (Brabender units) (**) | 400 | 2000 | 1100 | 3200 | 1900 | 900 |
| Amylose (%) | 25 | 1 | 24 | 20 | 16.7 | 34 |
| Amylopectin (%) | 75 | 99 | 76 | 80 | 83.3 | 66 |
| Retrogradation | High | Low | High | High | Medium | High |
| Granule size (µm) | 2-38 | 5-25 | 5-25 | 15-100 | 5-35 | 5-10 |
| Appearance | Opaque | Trasparent | Opaque | Trasparent | Trasparent | Opaque |
| Consistency (elongation at break) of starch gel (*) | Short | Very long | Short | Long | Long | Short |
| Taste | Cereals | Cereals | Cereals | Neutral | Neutral | Neutral |

Advantageously, the Applicants have found that mixing corn starch and corn flour improves the workability of the dough and the structure of the end product, with particular reference to the formation, uniformity of alveolation and softness.

The expression "resistant corn starch", as used here, is understood as meaning type 2 (RS2) resistant starch derived from specific corn varieties with a high resistant starch content.

The expression "rice sourdough", as used here, is understood as meaning a powder obtained from the dehydration of a dough of rice flour and water, subjected to natural leavening with a starter based on lactic bacteria and yeasts. The food composition according to the invention is devoid of cellulose derivatives and the function of thickening agent performed by the cellulose derivatives in the products of the prior art is performed here by the partially hydrolysed guar gum, as defined above, in combination with the raw chickpea flour.

The partially hydrolysed guar gum according to the present invention, in particular, retains the water in the dough, making it more viscous.

On the other hand, conventional, non-hydrolysed, guar gum thickens the dough making it more difficult to work, with limited leavening and resulting in a non-uniform internal structure in the oven-baked product.

The present invention will be further described with reference to some examples of embodiment provided hereinbelow way of a non-limiting example.

### EXAMPLE 1 - Example of composition according to the invention

An example of a food composition for the preparation of a naturally leavened, gluten-free, bakery product according to the present invention is composed of the following ingredients:

| *Ingredient* | *Percentage (%)* |
|---|---|
| Corn starch | 50 |
| Rice flour | 30 |
| Raw chickpea flour | 6.9 |
| Resistant corn starch (commercial product HI-MAIZE^{®} made by the company Ingredion) | 4 |
| Caster sugar | 3 |
| Rice sourdough (commercial product "Rise 25" made by the company Bocker) | 2.1 |
| Partially hydrolysed guar gum (commercial product "Edicol 25" made by the company Lucid Colloids Ltd | 2 |
| Salt | 2 |
| Total | 100 |

The percentages shown above are to be understood as being by weight in relation to the total weight of the ingredients.

The chickpea *(Cicer arientinum)* flour used had the composition shown in Table 2 below:

**Table 2: Composition of the chickpea flour according to the invention**

| Chemical composition | Value per 100 g |
|---|---|
| Edible part (%) | 100 |
| Water | 10.3 g |
| Proteins | 20.9 g |
| Lipids | 6.3 g |
| Cholesterol (mg) | 0 mg |
| Available carbohydrates | 46.9 g |
| Starch | 39.3 g |
| Soluble sugars | 3.7 g |
| Total fibre | 13.6 g |
| Soluble fibre | 1.13 g |
| Insoluble fibre | 12.45 g |

### EXAMPLE 2 - Method for making a bakery product from the composition of the present invention

Depending on the type of gluten-free bakery product to be obtained, the following quantities of the composition according to the invention in the form of powder, water, oil and yeast (*Saccharomyces cerevisiae*) were prepared:

**Table 3: Quantities of the composition according to the invention, water, oil and dry yeast for making a dough for a gluten-free bakery product according to the invention.**

| Product | Composition according to Example 1 (g) | Water (g) | Oil (g) | Dehydrated yeast (g) |
|---|---|---|---|---|
| Bread | 350 | 250 - 280 | 15 | 7 |
| Manually kneaded bread/rolls | 350 | 200 | 15 | 7 |
| Pizza | 350 | 200 | 30 | 7 |
| Focaccia | 350 | 200 | 30 | 7 |

The aforementioned quantities of the composition according to invention, water, oil and yeast were mixed in a planetary mixer provided with spiral beaters operated at a speed of 80 rpm, for 15 minutes, until a homogeneous mix was obtained.

Preferably, the oil is extra virgin olive oil; alternatively, to obtain a lighter taste, it is possible to use sunflower oil, corn oil or soya oil.

### Example 2.1 Bread

The aforementioned uniform dough was shaped into a loaf with a weight of 620-650 grammes.

The shaped dough was left to rise for 1 hour at 35°C in an oven (directly inside the baking tray) or at room temperature covered for 1 hour and 30 minutes.

Baking of the leavened mix was performed in an oven for 30 minutes at 200°C.

The baked loaf prepared according to the present invention was well-leavened, had a golden colour and a uniform alveolation with soft and moist crumbs.

### Example 2.2 Focaccia

The aforementioned homogeneous dough was spread out in a tray with a diameter of 27 cm, previously uniformly lined with oil. 2 spoonfuls of oil and large-grained salt were added onto the surface of the spread dough.

Then the dough was left to rise for 30 minutes at 30°C.

Baking of the leavened dough was performed in an oven for 20 minutes at 180°C.

The baked focaccia prepared according to the present invention had a golden colour, with an open structure, soft interior and golden outer crust.

### Example 2.3 Pizza

The aforementioned uniform dough was spread inside a baking tray (diameter 18 cm) previously uniformly lined with oil, and a dressing of chopped tomatoes (200 g) and optionally mozzarella (125 grammes) and oregano were added onto the surface of the dough.

Leavening was performed for 50 minutes at 35°C in an oven at a controlled temperature.

Baking of the leavened dough was performed in an oven for 25 minutes at 200°C.

The cooked pizza prepared according to the present invention is similar to gluten containing pizzas, both in appearance and in consistency of the soft base with crunchy edges.

### EXAMPLE 3 - Comparative tests - Guar gum

A test was carried out in order to compare the characteristics of the internal structure (crumbs) and outer structure (crust) of a loaf of bread obtained according to Example 2.1 of the invention with those of a gluten-free loaf prepared from a food composition identical to that of Example 1, in which however the partially hydrolysed guar gum, as defined in the present invention, was replaced with a similar quantity of conventional guar gum and subjected to the same procedure described in Example 2.1.

As can be seen in Figure 1 (on the left), the bread prepared from a food composition according to the present invention has a uniform, compact and elastic internal structure, with uniformly sized alveoli, and has a uniform thickness of the crust.

On the other hand, the bread prepared from the aforementioned composition comprising conventional guar gum (Figure 1, on the right) has an internal structure with non-uniform alveolation, areas not well-formed and a crust with a non-uniform thickness.

Furthermore, Figure 2 (on the left) shows how the loaf obtained according to the present invention has a well-formed, correctly leavened volume and has a uniformly baked outer crust.

Instead, the loaf obtained from a composition comprising conventional guar gum (Figure 2, on the right) has a volume which is less than that of the loaf according to the present invention and the crust is also thin, fragile and cracked.

The results of the comparative test clearly show that the loaf obtained form the composition according to the present invention has a quality which is substantially superior to a loaf obtained from a composition comprising conventional guar gum.

This result is due to the different behaviour of the partially hydrolysed guar gum according to the present invention compared to the conventional guar gum in an aqueous solution.

In fact, as shown in Figures 5 and 6 (on the left), in an aqueous solution with a concentration of 2.5% and 5% respectively, the aforementioned partially hydrolysed guar gum dissolves uniformly, without the formation of lumps, and also maintains a fluid consistency.

Instead, conventional guar gum, which has a molecular weight of between 2 million and 3 million Daltons (Figures 5 and 6, on the right), creates lumps and a lack of uniformity due to its capacity to thicken the aqueous solution; consequently, when kneaded with water and the other ingredients mentioned in Example 2 to form a gluten-free loaf, a dough which is difficult to work - and in particular difficult to leaven - is formed.

### EXAMPLE 4 - Comparative test - Chickpea flour

A test was carried out in order to compare the characteristics of the internal structure (crumbs) and outer structure (crust) of a gluten-free loaf of bread prepared from a food composition according to Example 1 with those of a gluten-free loaf prepared from a food composition identical to that of Example 1, except for the fact that it does not contain chickpea flour, which was instead replaced with an identical quantity of corn starch.

The method for preparing both the aforementioned types of bread was that described in Example 2.1.

As shown in Figure 3 (on the left), the bread obtained from the food composition according to the present invention has a uniformly baked and relatively compact outer crust.

Instead, the gluten-free bread prepared from the aforementioned composition without chickpea flour (Figure 3, on the right) has a dry, non-uniform, outer crust which tends to crumble and break off, with multiple scoring and cracking on the surface.

Figure 4 shows a comparison of the internal structure of the two loaves of bread: the internal structure of the bread obtained from the composition of the present invention (on the left) is uniform, homogeneous, with constant-size alveoli, while the internal structure of the gluten-free bread prepared from the composition without chickpea flour (on the right) has an internal structure which is not well-formed and compact and moist, with very small size alveoli.

The results of this comparative test show how the presence of chickpea flour in the composition according to the present invention is fundamental for obtaining a high-quality end product.

## Claims

1. A food composition for the preparation of a naturally leavened bakery product free of gluten or components thereof, comprising at least a starchy ingredient free of gluten or components thereof, a legume flour and partially hydrolysed guar gum having a molecular weight of between 500,000 Da and 1,000,000 Da, said composition being free of cellulose derivatives.

2. The food composition according to claim 1, wherein said legume flour is selected from the group comprising chickpea flour, bean flour, faba bean flour, pea flour, lentil flour.

3. The food composition according to claim 2, wherein said legume flour is chickpea flour.

4. The food composition according to claim 3, comprising at least 4%, preferably 5-8%, by weight of chickpea flour.

5. The food composition according to any one of claims 1-4, comprising at least 1%, preferably 1.5-5%, by weight of said partially hydrolysed guar gum.

6. The food composition according to any one of claims 1-5, wherein said starchy ingredient free of gluten or components thereof is selected from the group comprising corn starch, rice flour, potato starch, pea starch, cassava starch, sorghum starch and mixtures thereof.

7. The food composition according to any one of claims 1-6, further comprising rice sourdough.

8. The food composition according to any one of claims 1-7, comprising two starchy ingredients free of gluten or components thereof, said two ingredients preferably consisting of corn starch and rice flour.

9. The food composition according to any one of claims 1-8, further comprising resistant corn starch.

10. The food composition according to any one of claims 1-9, wherein said composition comprises, in percentage by weight of the total weight of the composition, 45% to 55% of corn starch, 25% to 35% of rice flour, 6% to 8% of chickpea flour, 3% to 5% of resistant corn starch, 2% to 4% of sugar, 1% to 3% of rice sourdough, 1.5% to 3% of said partially hydrolysed guar gum.

11. The food composition according to any one of claims 1-10, wherein said composition is in the form of a dry powder.

12. A dough for the preparation of gluten-free bakery products, comprising a food composition according to any one of claims 1-11.

13. A gluten-free bakery product comprising a food composition according to any one of claims 1-11.

## Patentansprüche

1. Nahrungsmittelzusammensetzung zur Herstellung einer natürlich gesäuerten Backware, die frei von Gluten oder Bestandteilen davon ist, umfassend mindestens eine stärkehaltige Zutat, die frei von Gluten oder Bestandteilen davon ist, ein Hülsenfruchtmehl und teilweise hydrolysiertes Guarkernmehl mit einem Molekulargewicht zwischen 500.000 Da und 1.000.000 Da, wobei die Zusammensetzung frei von Cellulosederivaten ist.

2. Nahrungsmittelzusammensetzung nach Anspruch 1, wobei das Hülsenfruchtmehl aus der Gruppe ausgewählt ist, die Kichererbsenmehl, Bohnenmehl, Fababohnenmehl, Erbsenmehl und Linsenmehl umfasst.

3. Nahrungsmittelzusammensetzung nach Anspruch 2, wobei das Hülsenfruchtmehl Kichererbsenmehl ist.

4. Nahrungsmittelzusammensetzung nach Anspruch 3, umfassend mindestens 4 Gew.-%, vorzugsweise 5-8 Gew.-%, Kichererbsenmehl.

5. Nahrungsmittelzusammensetzung nach einem der Ansprüche 1-4, umfassend mindestens 1 Gew.-%, vorzugsweise 1,5-5 Gew.-%, des teilweise hydrolysierten Guarkernmehls.

6. Nahrungsmittelzusammensetzung nach einem der Ansprüche 1 bis 5, wobei die stärkehaltige Zutat, die frei von Gluten oder Bestandteile davon ist, aus der Gruppe ausgewählt ist, die Maisstärke, Reismehl, Kartoffelstärke, Erbsenstärke, Cassavastärke, Hirsestärke und Mischungen daraus, umfasst.

7. Nahrungsmittelzusammensetzung nach einem der Ansprüche 1-6, die ferner Reissauerteig umfasst.

8. Nahrungsmittelzusammensetzung nach einem der Ansprüche 1-7, mit zwei stärkehaltigen Zutaten, die frei von Gluten oder Bestandteilen davon sind, wobei die beiden Zutaten vorzugsweise aus Maisstärke und Reismehl bestehen.

9. Nahrungsmittelzusammensetzung nach einem der Ansprüche 1-8, die ferner resistente Maisstärke enthält.

10. Nahrungsmittelzusammensetzung nach einem der Ansprüche 1-9, wobei die Zusammensetzung, in Gewichtsprozent des Gesamtgewichts der Zusammensetzung, 45% bis 55% Maisstärke, 25% bis 35% Reismehl, 6% bis 8% Kichererbsenmehl, 3% bis 5% resistente Maisstärke, 2% bis 4% Zucker, 1% bis 3 % Reissauerteig, 1,5 bis 3 % teilweise hydrolysiertes Guarkernmehl umfasst.

11. Lebensmittelzusammensetzung nach einem der Ansprüche 1-10, wobei die Zusammensetzung in Form eines trockenen Pulvers vorliegt.

12. Teig für die Herstellung von glutenfreien Backwaren, umfassend eine Lebensmittelzusammensetzung nach einem der Ansprüche 1-11.

13. Glutenfreie Backware umfassend eine Lebensmittelzusammensetzung nach einem der Ansprüche 1-11.

## Revendications

1. Composition alimentaire pour la préparation d'un produit de boulangerie levé naturellement, exempt de gluten ou de composants de celui-ci, comprenant au moins un ingrédient amylacé exempt de gluten ou de composants de celui-ci, une farine de légumineuse et de la gomme de guar partiellement hydrolysée ayant un poids moléculaire compris entre 500 000 Da et 1 000 000 Da, ladite composition étant exempte de dérivés cellulosiques.

2. Composition alimentaire selon la revendication 1, dans laquelle ladite farine de légumineuse est choisie dans le groupe comprenant la farine de pois chiche, la farine de fève, la farine de fèverole, la farine de pois, la farine de lentille.

3. Composition alimentaire selon la revendication 2, dans laquelle ladite farine de légumineuse est la farine de pois chiche.

4. Composition alimentaire selon la revendication 3, comprenant au moins 4 %, de préférence 5 à 8 %, de farine de pois chiche.

5. Composition alimentaire selon l'une quelconque des revendications 1 à 4, comprenant au moins 1 %, de préférence 1,5 à 5 % en poids de ladite gomme de guar partiellement hydrolysée.

6. Composition alimentaire selon l'une quelconque des revendications 1 à 5, dans laquelle ledit ingrédient amylacé exempt de gluten ou de composants de celui-ci est choisi dans le groupe comprenant l'amidon de maïs, la farine de riz, l'amidon de pomme de terre, l'amidon de pois, l'amidon de manioc, l'amidon de sorgho et leurs mélanges.

7. Composition alimentaire selon l'une quelconque des revendications 1 à 6, comprenant en outre du levain de riz.

8. Composition alimentaire selon l'une quelconque des revendications 1 à 7, comprenant deux ingrédients amylacés exempts de gluten ou de composants de celui-ci, lesdits deux ingrédients consistant de préférence en amidon de maïs et farine de riz.

9. Composition alimentaire selon l'une quelconque des revendications 1 à 8, comprenant en outre de l'amidon de maïs résistant.

10. Composition alimentaire selon l'une quelconque des revendications 1 à 9, laquelle composition comprend, en pourcentage en poids du poids total de la composition, 45 % à 55 % d'amidon de maïs, 25 % à 35 % de farine de riz, 6 % à 8 % de farine de pois chiche, 3 % à 5 % d'amidon de maïs résistant, 2 % à 4 % de sucre, 1 % à 3 % de levain de riz, 1,5 % à 3 % de ladite gomme de guar partiellement hydrolysée.

11. Composition alimentaire selon l'une quelconque des revendications 1 à 10, laquelle composition est sous la forme d'une poudre sèche.

12. Pâte pour la préparation de produits de boulangerie sans gluten, comprenant une composition alimentaire selon l'une quelconque des revendications 1 à 11.

13. Produit de boulangerie sans gluten comprenant une composition alimentaire selon l'une quelconque des revendications 1 à 11.
